# EUROPEAN PATENT APPLICATION

(11) **EP 1 008 565 A1**
(43) Date of publication of application: **14.06.2000**
(21) Application number: 99121482.6
(22) Date of filing: 28.10.1999
(51) Int. Cl.: C03C 25/16, C03C 25/20, C03C 25/10, B01D 53/88, B01D 53/00, C02F 1/30, C02F 1/72

(54) **Process for the preparation of thread, string, rope or woven fabric with photocatalyst for decomposing organic compounds**

(30) Priority: 11.12.1998 JP 35201898; 28.12.1998 JP 37202698
(71) Applicant: Iwashita, Choshu, Kobe City, Hyogo Prefecture (JP); Mitani, Yasuhisa, Masuda City, Shimane Prefecture (JP); Asami, Chihiro, Jakarta, Utara 14350 (ID)
(72) Inventor: Iwashita, Choshu, Kobe City, Hyogo Prefecture (JP); Mitani, Yasuhisa, Masuda City, Shimane Prefecture (JP); Asami, Chihiro, Jakarta, Utara 14350 (ID)
(74) Representative: MÜLLER & HOFFMANN Patentanwälte

(57) **Abstract**

Glass fiber 3 is immersed into a titania sol and dried to adhere the titania gel on the surface of the glass fiber 3, and heated at a high temperature of 450 C to 650 C. In the high-temperature treated glass fiber 3, the titania gel adhered on the surface changes to titanium dioxide (TiO₂) and a titanium dioxide layer 4 is formed on the surface of the glass fiber 3 as shown in Fig. 1. The titanium dioxide layer 4 has a layered structure in which it is adhered in the spots-like state on the surface of the glass fiber 3 as shown in the portion A or B in Fig. 1, and an outer light can be suitably transmitted through the glass fiber 3. The glass fiber 3 having the titanium dioxide layer 4 on the surface thereof can transmit outer light not only from the edge of the fiber but also from the outer peripheral surface, and can cause photocatalytic phenomenon at the portion of the titanium dioxide layer 4 by the specifically prepared illumination light such as an ultraviolet light irradiation lamp, etc., or sunlight, an interior light, etc.

## Description

### TECHNICAL FIELD

The present invention relates to a thread, string, rope or woven fabric for decomposing organic materials, which is applied to a photocatalyst for decomposing organic materials to be used as an environment-purification means such as a treatment of an exhaust gas, a treatment of waste water, a water-purification treatment or the like.

### BACKGROUND ART

A photocatalyst for decomposing organic substances forms an electron having a strong reducing function to a semiconductor substance and a positive pore having a strong oxidation function by irradiating light to said semiconductor substance such as titanium oxide and the like and decomposes a molecular species (organic substances) contacted to said semiconductor by an oxidation-reduction function. With regard to such photocatalytic techniques, various proposals have heretofore been made, and photocatalytic materials as disclosed in, for example, Japanese Laid-Open Patent Application No. Hei. 9-253505 or No. Hei. 6-134476. Also, the inventor of the present application has been proposed in Japanese Laid-Open Patent Application No. Hei. 10-243813.

### DISCLOSURE OF THE INVENTION

The present inventor has carried out experiment and actual proof about organic materials decomposing ability with regard to various materials after filing the above-mentioned patent application, and is wrestling with development of a photocatalytic material which can be applied to a wide field.

Thus, an object of the present invention is to provide a photocatalytic material which can utilize not only a light source prepared for the photocatalyst but also usual sunlight or indoor light, and can be applied to various fields, and as a result, the inventor has accomplished the present invention.

To accomplish the above object, the present invention is to provide a thread for a photocatalyst for decomposing organic materials which comprises immersing a transparent thread-like material comprising quartz glass, lead glass, soda glass or Pyrex in a titania sol, drying the transparent thread to form and adhere a titania gel on the surface of said transparent thread and subjecting said transparent thread to heat treatment to form a titanium dioxide layer on the surface of said transparent thread.

Also, the thread of the present invention is prepared by repeating, at least three times to five times, the steps of immersing the transparent thread-like material in a titania sol, drying and subjecting to heat treatment.

Further, in the present invention, the thread is prepared by subjecting the transparent thread-like material to heat treatment at the temperature of 450 C to 650 C to prepare a thread for a photocatalyst for decomposing organic substances.

Moreover, a string for a photocatalyst for decomposing organic substances of the present invention comprises threads for a photocatalyst for decomposing organic substances in which a titanium dioxide layer is formed on the surfaces thereof being twisted into a bundle shape.

Furthermore, a rope for a photocatalyst for decomposing organic substances of the present invention comprises strings for a photocatalyst for decomposing organic substances being twisted into a bundle shape.

Also, a woven fabric for a photocatalyst for decomposing organic substances of the present invention comprises threads for a photocatalyst for decomposing organic substances in which a titanium dioxide layer is formed on the surfaces thereof being woven into a fabric.

Also, a woven fabric for a photocatalyst for decomposing organic substances of the present invention comprises coating a coating material containing metal crystal fine particles comprising titanium oxide, zinc oxide, tungsten oxide, niobium oxide, silicon oxide, etc. on one side surface of a woven fabric which has woven a transparent string-like substance comprising quartz glass, lead glass, soda glass, Pyrex, etc. as the warp and the woof, and after drying, subjecting to high temperature treatment to calcinate and form a photocatalytic substance for decomposing organic substance comprising titanium dioxide, zinc dioxide, tungsten trioxide, niobium trioxide, silicon dioxide, etc. on the one surface side thereof.

Also, a woven fabric for a photocatalyst for decomposing organic substances of the present invention is prepared by repeating, at least three times to five times, the steps of coating a coating material containing metal crystal fine particles on one side surface of a woven fabric which has woven a transparent string-like substance, drying the same and subjecting the same to high temperature treatment.

Moreover, a woven fabric for a photocatalyst for decomposing organic substances of the present invention is prepared by coating a coating material containing metal crystal fine particles on one side surface and subjecting the dried woven fabric to high temperature treatment, wherein the treatment temperature is made 450 C to 650 C.

### BRIEF DESCRIPTION OF THE DRAWINGS

Fig. 1 is a drawing showing a thread (glass fiber) for a photocatalyst for decomposing organic substances.
Fig. 2 is a drawing showing a preparation process of a thread (glass fiber) for a photocatalyst for decomposing organic substances.
Fig. 3 is a block diagram showing a preparation process of a thread (glass fiber) for a photocatalyst for decomposing organic substances.
Fig. 4 is a drawing showing woven fabric prepared by using threads shown in Fig. 1.
Fig. 5 is a drawing showing woven fabric prepared by using threads shown in Fig. 1.
Fig. 6 is a drawing showing a rope prepared by using threads shown in Fig. 1.
Fig. 7 is a perspective view in which a coating material is coated by a roller for producing woven fabric for a photocatalyst for decomposing organic substances.
Fig. 8 is a drawing showing the state of coating a coating material by a spray gun for producing woven fabric for a photocatalyst for decomposing organic substances.
Fig. 9 is a block diagram showing a preparation process of woven fabric for a photocatalyst for decomposing organic substances.
Fig. 10 is a drawing showing an enlarged view of a producing woven fabric.

### DETAILED DESCRIPTION OF THE INVENTION

In the following, one embodiment of the present invention is explained by referring to drawings.

The inventor of the present application has previously proposed a material in which a titanium oxide layer is formed on the peripheral surface of a glass fiber (Japanese Patent Application No. Hei. 10-243813), but it was in fact difficult to fix the titanium oxide layer on the surface of the glass fiber stably. According to earnest studies carried out by the applicant, it was confirmed that the method of immersing a glass fiber in a titania sol would be the best for fixing the titania on the surface of the glass fiber. Thus, the method is firstly explained below.

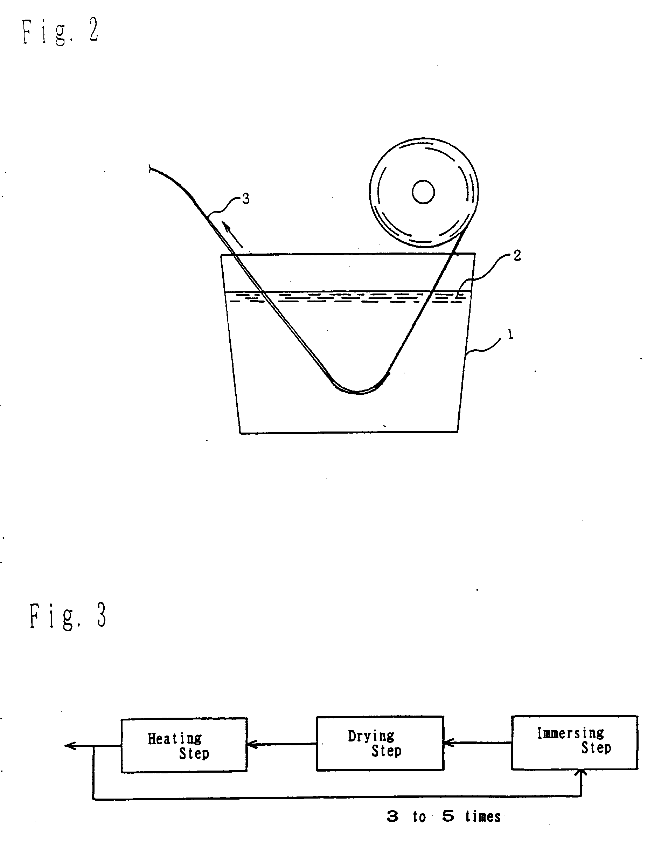

As shown in Fig. 2, a titania sol is formulated in a solution containing a surfactant in an amount of 2 to 5 % in a water tank 1, and the mixture was stirred to store a titania sol formulated solution 2. The titania sol can be obtained by subjecting an organic titanate or a titanium salt to hydrolysis or by suspending a fine particulate titanium dioxide in a solvent such as water or an alcohol. It is preferred to provide a stirrer such as a propeller at the bottom portion of the water tank 1. Next, a glass fiber 3 which can be formed by elongating quartz glass, lead glass, soda glass, etc. in a string shape (100 to 500 microns or so) is successively supplied into the titania sol formulated solution 2 and immersed therein. The immersion time is 3 minutes to 10 minutes per each time. The thus immersed glass fiber 3 is once drawn up from the water tank 1, and then, naturally dried. The drying time is 10 minutes to 30 minutes or so. When the glass fiber 3 is thus dried, the titania sol attached to the surface thereof is dried to become a titania gel.

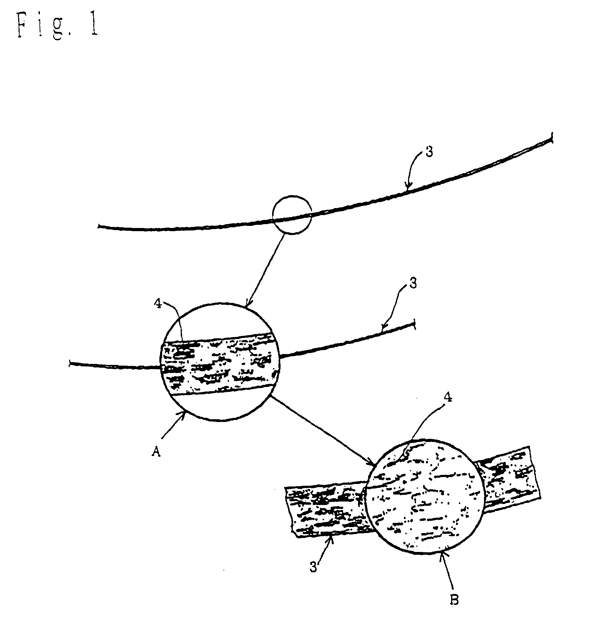

The glass fiber 3 in which the immersing step and the drying step are repeated as shown in Fig. 3 is supplied into a high temperature furnace heated to the treatment temperature of 450 C to 650 C whereby transferred to the heating step shown in Fig. 3. The heating time is suitably about 30 minutes. The titania gel attached to the surface of the glass fiber 3 which had been subjected to heat treatment changes to titanium dioxide (TiO₂) so that a titanium oxide layer 4 is formed on the surface of the glass fiber as shown in Fig. 1. The above-mentioned immersing step into the titania sol formulated solution 2 and the drying step, and further the heating step are generally repeated 3 to 5 times whereby the layer thickness and attached amount of the titanium dioxide layer 4 are gradually increased. The thus formed titanium dioxide layer 4 takes a layered structure in which titanium oxide is adhered in a spot-like shape on the surface of the glass fiber 3 as shown in portion A or portion B of Fig. 1, and outer light can be suitably transmitted through the glass fiber 3. Incidentally, when the layer thickness of the titanium dioxide layer 4 on the surface of the glass fiber 3 is to be increased or when the surface area of the spot-like titanium oxide layer 4 at the outer surface is to be increased, a method of increasing the repeating times of the above-mentioned immersing step or the drying step, or a method of electing a surfactant to be added to the titania sol formulated liquid 2 with a higher emulsifying ability may be employed.

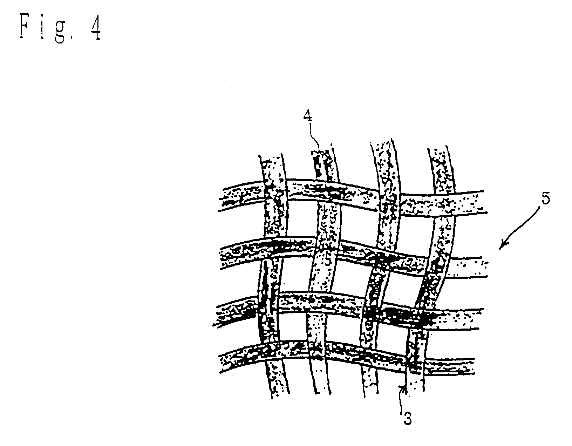

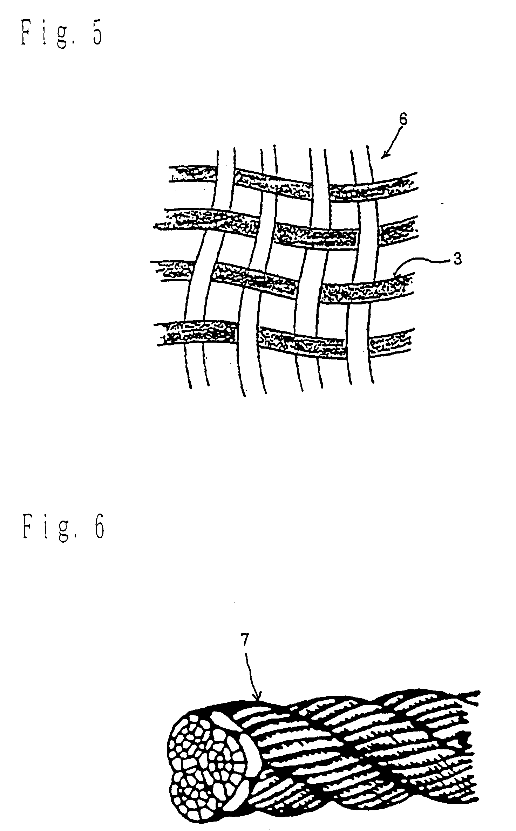

That is, outer light can be transmitted through the glass fiber 3 having the titanium dioxide layer 4 on the surface thereof not only form the edge of the fiber but also from a peripheral surface so that a photocatalytic phenomenon can be generated at the portion of the titanium dioxide layer 4 by a specifically prepared illumination light such as an ultraviolet light irradiation lamp, etc., or sunlight, interior light, etc. That is, in this phenomenon, light transmitted in the glass fiber 3 becomes an energy so that an oxidation-reduction function occurs wherein an electron and a positive pore are formed at the portion of the titanium dioxide layer 4. Such a glass fiber 3 can be used for various uses in place of the conventionally used threads. For example, the thus formed glass fiber 3 is used as the warp and the woof to weave a woven fabric 5 as shown in Fig. 4. Also, among the warp and the woof, either of which may be the glass fiber 3 and a woven fabric 6 may be woven as shown in Fig. 5. Moreover, it is not specifically shown in the drawing, a bundle of the thus formed glass fiber 3 are twisted with three bundles or five bundles to form a string, and the thus formed strings may be further twisted to a bundle shape to form a rope 7 as shown in Fig. 6.

### (Example 1)

The thus formed glass fiber 3 (threads), woven fabrics 5 and 6, a string or a rope 7 can be applied to various fields as a photocatalytic material, and, for example, when they are used as a fiber raw material for a pillow cover, sheets, white cloth, clothes, etc., sterilization and deodorant can be realized by the photocatalytic reaction based on natural light.

### (Example 2)

Also, by using an ultraviolet rays-irradiation lamp in combination, the materials may be used as a filter medium of a gas preventing filter, a sterilization device for air-conditioning, an air cleaner, etc.

### (Example 3)

Also, when it is used as a net for golf practice, a fish net, a hood for automobile, a tent, an architectural material such as wall paper, an outer wall material, etc., they can be provided as a material to which stain is difficultly adhered as compared with the conventional materials.

### (Example 4)

Also, it can be applied to medical supplies such as a sealing pad of a wound, a thread for operation, a bandage, an eye bandage, gauze, a mask for medical use, etc., or household such as a sterilization sheet, a mildewproof sheet, etc.

Moreover, the applicant has conceived the following embodiment so that said embodiment is explained below.

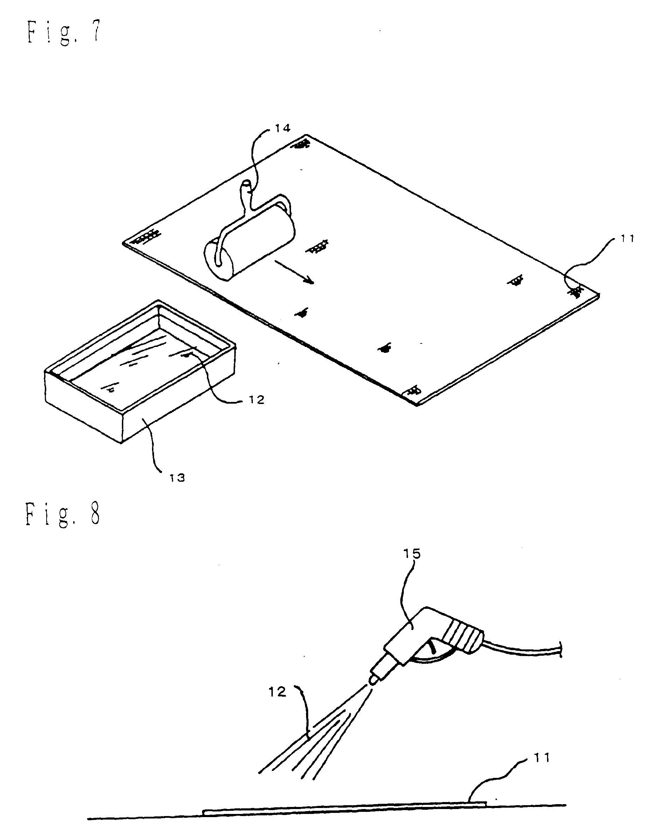

The inventor of the present application has carried out trial and error to form such a titanium dioxide layer, etc. on the one surface side of a glass cloth, and as a result, he has accomplished a woven fabric for a photocatalyst which is used for decomposing organic substances according to the following embodiments. That is, in the present embodiment, a transparent thread-like substance comprising quartz glass, lead glass, soda glass, Pyrex, etc. is used as the warp and the woof whereby a woven fabric 11 shown in Fig. 7, i.e., a glass cloth is formed and a coating material 12 containing metal crystal fine particles is coated on one side surface thereof. In the embodiment of the invention, titania sol is used as the metal crystal fine particles, and the coating material 12 is stored in a tray 13 as shown in Fig. 7.

The coating material 12 is formed by formulating about 2 to 5 % of titania sol into a solution to which a surfactant is added and stirring. The titania sol can be obtained by subjecting organic titanate or titanium salt to hydrolysis or suspending fine particulate titanium dioxide in a solvent such as water, alcohol, etc. The coating material 12 to be stored in a tray 13 is coated on one side surface (see Fig. 7) of a woven fabric 1 by using a coating roller 14. Moreover, coating of the coating material 12 to the woven fabric 11 may be carried out by coating one side surface of the woven fabric by using a spray gun as shown in Fig. 8. The woven fabric 11 one side surface of which is coated by a coating material 12 is naturally dried. The drying time is generally 10 minutes to 30 minutes, and when drying is carried out, the titania sol adhered to one side surface of the woven fabric 11 becomes a titania gel.

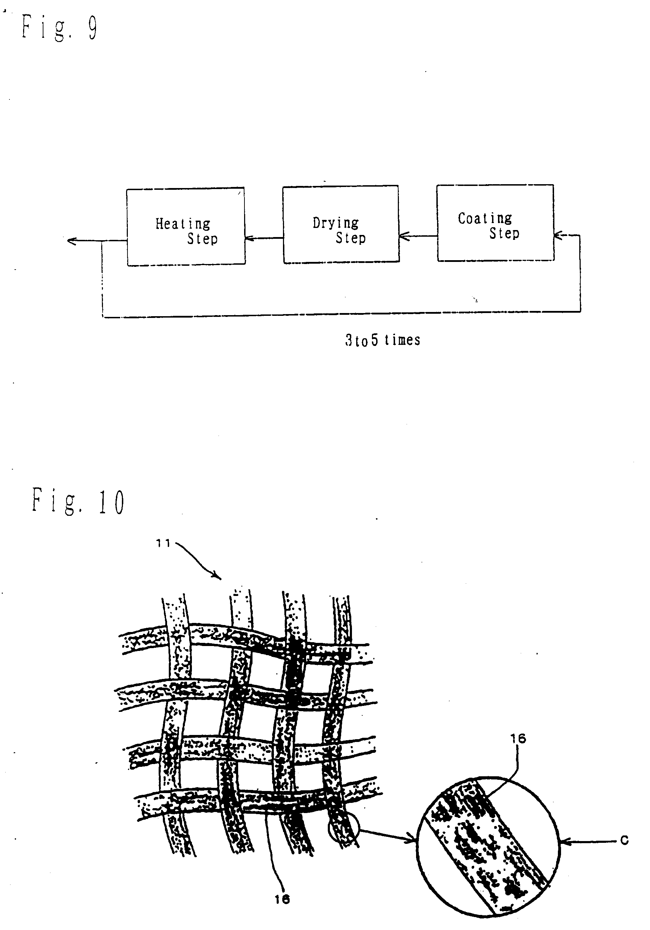

As shown in Fig. 9, the woven fabric 11 passed through the coating step and the drying step as mentioned above is then supplied to a high temperature furnace heated to 450 C to 650 C to carry out the heat treatment shown in Fig. 9. The heating time is suitably about 30 minutes. In the woven fabric 1 thus heat treated at high temperature, the titania gel coated on one side surface changes to titanium dioxide (TiO₂) to form a titanium dioxide layer 16 by calcination on the one side surface of the woven fabric 11 as shown in Fig. 10. The above-mentioned coating step, drying step and heating step are each repeated generally three to five times whereby the layer thickness and the coated amount of the titanium dioxide layer 16 are gradually increased. The thus prepared titanium dioxide layer 16 has, as shown at the portion C in Fig. 10, a layered structure adhered on the surface of the thread constituting the woven fabric 11 in a spots state and outer light is suitably transmitted through the woven fabric 11 comprising glass cloth. Incidentally, if it is desired to increase a layer thickness of the titanium dioxide layer 16 on the one side surface of the woven fabric 11 or to increase the surface area of the titanium dioxide layer 16 in the spots shape on the outer surface thereof, there are the method of increasing the number of repeating of the above-mentioned respective steps of coating or drying, the method of selecting a surfactant in the coating material 12 with a higher emulsifying ability, or the like.

That is, the woven fabric 11 having the titanium dioxide layer 16 at the one side surface thus prepared can transmit outer light not only through the edge portion but also a back surface having no titanium dioxide layer 16. Thus, it can cause photocatalytic phenomenon by a specifically prepared illumination light such as an ultraviolet light irradiation lamp, or sunlight, interior light, etc. at the portion of the titanium dioxide layer 16. That is, in this phenomenon, light transmitted into the woven fabric 11 comprising glass cloth becomes an energy to cause an oxidation-reduction action whereby an electron and a positive pore are formed at the titanium dioxide layer 16. The thus prepared woven fabric 11 can be used for various uses. For example, by using it as a cloth for a curtain, sunlight is mainly irradiated to the back surface side of the woven fabric 11 whereby more active photocatalytic reaction can be obtained. Also, the titanium dioxide layer 16 can be provided only one side surface of the cloth so that even when an adhesive (organic series) is coated at the back surface side having no titanium dioxide layer 16 and the cloth is adhered to a wall or a panel, no photocatalytic reaction which decomposes organic substances occurs at the back surface side so that the adhesive component is not decomposed. Accordingly, it is suitably used for a cloth for wall, a ceiling cloth, a tight seal for a wound or the like.

In the above-mentioned embodiment, a titania gel (titanium oxide) is explained as an example of the metal crystal fine particles contained in the coating material 12, but as the material contained in the coating material, there may be mentioned, for example, various metal crystal fine particles such as zinc oxide, tungsten dioxide, niobium dioxide, silicon oxide, etc. The woven fabric prepared by coating the coating material comprising these materials to the one side surface is supplied into a furnace at high temperature whereby it is calcinated as a photocatalytic substance for decomposing organic substances. That is, zinc oxide is converted into zinc dioxide by calcination, tungsten dioxide into tungsten trioxide, niobium dioxide into niobium trioxide, silicon oxide into silicone dioxide, respectively. In the thus converted and calcinated photocatalytic substance layer for decomposing organic substances, a photocatalytic reaction is carried out in the same manner as in the above-mentioned titanium dioxide layer 16. Thus, it is also possible to use these woven fabrics prepared as mentioned above for various uses as in the above-mentioned embodiments.

According to the above embodiments, there is an effect of capable of providing a photocatalytic material which can be applied to various fields by utilizing not only a light source prepared for a photocatalyst but also general sunlight or interior light.
Fig. 3
   Heating step
   Drying step
   Immersing step
   3 to 5 times
Fig. 9
   Heating step
   Drying step
   Coating step
   3 to 5 times

## Claims

1. A thread for a photocatalyst for decomposing organic materials which comprises immersing a transparent thread-like material comprising quartz glass, lead glass, soda glass or Pyrex in a titania sol, drying the transparent thread to form and adhere a titania gel on the surface of said transparent thread and subjecting said transparent thread to heat treatment to form a titanium dioxide layer on the surface of said transparent thread.

2. The thread for a photocatalyst for decomposing organic materials according to Claim 1, wherein the thread is prepared by repeating, at least three times to five times, the steps of immersing the transparent thread-like material in a titania sol, drying and subjecting to heat treatment.

3. The thread for a photocatalyst for decomposing organic materials according to Claim 1, wherein the step of heat treatment is carried out at 450 C to 650 C.

4. A string for a photocatalyst for decomposing organic substances which comprises threads for a photocatalyst for decomposing organic substances according to any one of Claim 1, 2 or 3 at the surface of which is formed a titanium dioxide layer being twisted into a bundle shape.

5. A rope for a photocatalyst for decomposing organic substances which comprises strings for a photocatalyst for decomposing organic substances formed according to Claim 4 being twisted into a bundle shape.

6. A woven fabric for a photocatalyst for decomposing organic substances which comprises threads for a photocatalyst for decomposing organic substances according to any one of Claim 1, 2 or 3 at the surface of which is formed a titanium dioxide layer being woven into a fabric.

7. A woven fabric for a photocatalyst for decomposing organic substances which comprises coating a coating material containing metal crystal fine particles comprising titanium oxide, zinc oxide, tungsten oxide, niobium oxide or silicon oxide, on one side surface of a woven fabric which has woven a transparent string-like substance comprising quartz glass, lead glass, soda glass or Pyrex, as the warp and the woof, and after drying, subjecting to high temperature treatment to calcinate and form a photocatalytic substance for decomposing organic substance comprising titanium dioxide, zinc dioxide, tungsten trioxide, niobium trioxide or silicon dioxide, on the one surface side thereof.

8. A woven fabric for a photocatalyst for decomposing organic substances prepared by repeating, at least three times to five times, the steps of coating a coating material containing metal crystal fine particles on one side surface of a woven fabric which has woven a transparent string-like substance, drying the same and subjecting the same to high temperature treatment.

9. A woven fabric for a photocatalyst for decomposing organic substances prepared by coating a coating material containing metal crystal fine particles on one side surface and subjecting the dried woven fabric to high temperature treatment, wherein the treatment temperature is made 450 C to 650 C.
